# EUROPEAN PATENT APPLICATION

(11) **EP 4 685 686 A1**
(43) Date of publication of application: **28.01.2026**
(21) Application number: 24907705.8
(22) Date of filing: 08.10.2024
(51) Int. Cl.: G06F 30/27, G06F 30/12, G06F 9/451, H01M 10/04, H01M 4/04, G01R 31/367, G06F 119/18, G06F 111/04

(54) **DATA PROCESSING APPARATUS AND METHOD FOR ANALYZING BATTERY MANUFACTURING PROCESS**

(30) Priority: 22.12.2023 KR 20230190095
(71) Applicant: LG Energy Solution, Ltd., Seoul 07335 (KR); Seoul National University R&DB Foundation, Gwanak-gu Seoul 08826 (KR)
(72) Inventor: LEE, Bora, Daejeon 34122 (KR); LEE, Jong Min, Seoul 06321 (KR); JUNG, Eunjoo, Daejeon 34122 (KR); KIM, Haechang, Seoul 07264 (KR); YUN, Ji Young, Goyang-si, Gyeonggi-do 10450 (KR); KIM, Hyeongseok, Daejeon 34122 (KR)
(74) Representative: Plasseraud IP
(86) International application number: PCT/KR2024/015263
(87) International publication number: WO 2025/135420

(57) **Abstract**

Disclosed is a data processing apparatus for analyzing a battery manufacturing process according to embodiments of the present invention, which includes at least one processor; and a memory configured to store at least one instruction executed by the at least one processor.

Here, the at least one instruction may include an instruction to collect process data for each process factor for a plurality of batteries; an instruction to construct a machine learning-based performance prediction model for predicting battery performance using the process data for each process factor; an instruction to generate analysis information indicating an effect of one or more process factors on a performance prediction value of the performance prediction model; and an instruction to output the generated analysis information through a predefined graphical user interface (GUI).

## Description

### [Technical Field]

This application claims priority to and the benefit of Korean Patent Application No.10-2023-0190095 filed in the Korean Intellectual Property Office on December 22, 2023, the entire contents of which are incorporated herein by reference.

The present invention relates to a data processing apparatus and method, and more particularly, to a data processing apparatus and method for analyzing a battery manufacturing process.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

A battery may be manufactured by sequentially performing an electrode manufacturing process, an assembly process, and an activation process. During the battery manufacturing process and after the battery manufacturing process is completed, various performance indicators of the battery, such as resistance, capacity, and charging time, are reviewed.

Since various process factors associated with each unit process affect the performance of the battery, and these process factors have very complex correlations, it is very difficult to identify which process factor has a major effect on the performance of the battery and how much a corresponding process factor affects the battery performance.

As a technology to solve the above problems, an appropriate data processing process is required that may identify process factors that affect the performance of the battery by using data related to the battery manufacturing process and analyze the influence of corresponding process factors.

### [Detailed Description of the Invention]

### [Technical Problem]

To obviate one or more problems of the related art, embodiments of the present disclosure provide a data processing apparatus for analyzing a battery manufacturing process.

To obviate one or more problems of the related art, embodiments of the present disclosure also provide a data processing method performed by the data processing apparatus.

### [Technical Solution]

In order to achieve the objective of the present disclosure, a data processing apparatus for analyzing a battery manufacturing process may include at least one processor; and a memory configured to store at least one instruction executed by the at least one processor.

Here, the at least one instruction may include an instruction to collect process data for each process factor for a plurality of batteries; an instruction to construct a machine learning-based performance prediction model for predicting battery performance using the process data for each process factor; an instruction to generate analysis information indicating an effect of one or more process factors on a performance prediction value of the performance prediction model; and an instruction to output the generated analysis information through a predefined graphical user interface (GUI).

H ere, the process data may include data related to one or more unit process among an electrode coating process, an electrode rolling process, an assembly process, an activation process, and an End Of Line (EOL) process.

The instruction to construct the machine learning-based performance prediction model may include an instruction to remove process data about one or more process factors among the plurality of process factors based on one of the correlation degrees and importance degrees for the plurality of process factors.

The instruction to construct the machine learning-based performance prediction model may include an instruction to construct a performance prediction model that outputs at least one prediction value for one or more performance factors among the capacity and the resistance of the battery by using the process data for each process factor as learning data.

The instruction to construct the machine learning-based performance prediction model may include an instruction to generate a plurality of performance prediction models by applying different learning algorithms; and an instruction to select a performance prediction model that exhibits optimal performance among the performance prediction models, based on difference between a performance prediction value and a performance measurement value for each of the performance prediction models.

The instruction to generate the analysis information may include an instruction to calculate an influence index for each of the process factors based on a change in a performance prediction value according to a change in an individual process factor.

The instruction to output the analysis information through the predefined GUI may include an instruction to visualize and output one or more of a length, a size, a direction, and a color of an object corresponding to a process factor so as to correspond to an influence index of the corresponding process factor.

The instruction to output the analysis information through the predefined GUI may include an instruction to select top N process factors with high influence indexes (N is a natural number greater than or equal to 2); and an instruction to visualize and output objects corresponding to each of the N process factors so as to correspond to respective influence indexes of the objects.

The instruction to output the analysis information through the predefined GUI may include an instruction to group the plurality of process factors based on the unit process; an instruction to sum influence indexes of the process factors included in each of unit processes; and an instruction to visualize and output objects corresponding to each of the unit processes so that the objects correspond to influence indexes per each unit process.

The instruction to output the analysis information through the predefined GUI may include an instruction to output the change in the performance prediction value according to the change in the process factor in the form of a two-dimensional graph.

According to another embodiment of the present disclosure, a data processing method for analyzing a battery manufacturing process may include collecting process data for each process factor for a plurality of batteries; constructing a machine learning-based performance prediction model for predicting battery performance using the process data for each process factor; generating analysis information indicating an effect of one or more process factors on a performance prediction value of the performance prediction model; and outputting the generated analysis information through a predefined graphical user interface (GUI).

Here, the process data may include data related to one or more unit process among an electrode coating process, an electrode rolling process, an assembly process, an activation process, and an End Of Line (EOL) process.

The constructing the machine learning-based performance prediction model may include removing process data about one or more process factors among the plurality of process factors based on one of the correlation degrees and importance degrees for the plurality of process factors.

The constructing the machine learning-based performance prediction model may include constructing a performance prediction model that outputs at least one prediction value for one or more performance factors among the capacity and the resistance of the battery by using the process data for each process factor as learning data.

The constructing the machine learning-based performance prediction model may include generating a plurality of performance prediction models by applying different learning algorithms; and selecting a performance prediction model that exhibits optimal performance among the performance prediction models, based on difference between a performance prediction value and a performance measurement value for each of the performance prediction models.

The generating the analysis information may include calculating an influence index for each of the process factors based on a change in a performance prediction value according to a change in an individual process factor.

The outputting the analysis information through the predefined GUI may include visualizing and outputting one or more of a length, a size, a direction, and a color of an object corresponding to a process factor so as to correspond to an influence index of the corresponding process factor.

The outputting the analysis information through the predefined GUI may include select top N process factors with high influence indexes (N is a natural number greater than or equal to 2); and visualizing and outputting objects corresponding to each of the N process factors so as to correspond to respective influence indexes of the objects.

The outputting the analysis information through the predefined GUI may include grouping the plurality of process factors based on the unit process; summing influence indexes of the process factors included in each of unit processes; and visualizing and outputting objects corresponding to each of the unit processes so that the objects correspond to influence indexes per each unit process.

The outputting the analysis information through the predefined GUI may include outputting the change in the performance prediction value according to the change in the process factor in the form of a two-dimensional graph.

### [Advantageous Effects]

According to embodiments of the present disclosure, it is possible to provide analysis information on process factors affecting the performance of a battery, thereby supporting improvement of the battery manufacturing process.

### [Brief Description of the Drawings]

FIG. 1 shows a general battery manufacturing process.
FIG. 2 is an operational flowchart of a data processing method according to embodiments of the present invention.
FIG. 3 is an example of process data according to embodiments of the present invention.
FIG. 4 is an operational flowchart of a method for constructing performance prediction model according to embodiments of the present invention.
FIG. 5 is a reference diagram for explaining a data preprocessing method according to embodiments of the present invention.
FIG. 6 is an example screen of a user terminal for explaining a GUI according to embodiments of the present invention.
FIGS. 7 to 10 are examples of user terminal screens for explaining analysis information according to embodiments of the present invention.
FIG. 11 is a block diagram of a data processing apparatus according to embodiments of the present invention.

610: output item selection window
620: analysis information output window
1100: data processing apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

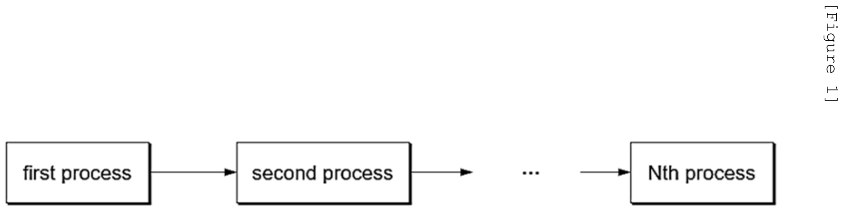

FIG. 1 shows a general battery manufacturing process.

A battery may be manufactured by sequentially performing multiple unit processes. More specifically, the battery manufacturing process may be classified into N unit processes and a battery may be manufactured by sequentially performing a first to Nth processes.

For example, unit processes, which may be classified into an electrode coating process (first process), an electrode rolling process (second process), an assembly process (third process), an activation process (fourth process), and an End Of Line (EOL) process (fifth process), may be sequentially performed to manufacture a battery cell.

During a process of performing individual unit processes or after battery manufacturing is completed, a performance test may be performed to confirm whether the battery exhibits intended performance. Here, the performance indicators of the battery to be tested may include discharge capacity, charge resistance, and discharge resistance of the battery.

If it is determined through this performance test that the battery does not meet the intended performance, a design change of the battery or adjustment of the manufacturing process variables is required.

However, since various process factors associated with each unit process affect the performance of the battery and these process factors have very complex correlations, it is difficult to derive process factors that have major effects on the performance of the battery. In addition, even if process factors that affect the performance of the battery are identified, it is very difficult to determine how much the corresponding process factors affect the performance of the battery.

The present invention relates to a technology for solving such problems, and relates to a data processing apparatus and method that can identify process factors that affect the battery performance by using data related to the manufacturing process of the battery and analyze the influence of the process factors.

Hereinafter, operations of the data processing apparatus according to the present invention and various embodiments of the present invention and a data processing method performed by the data processing apparatus will be described in detail with reference to the attached drawings.

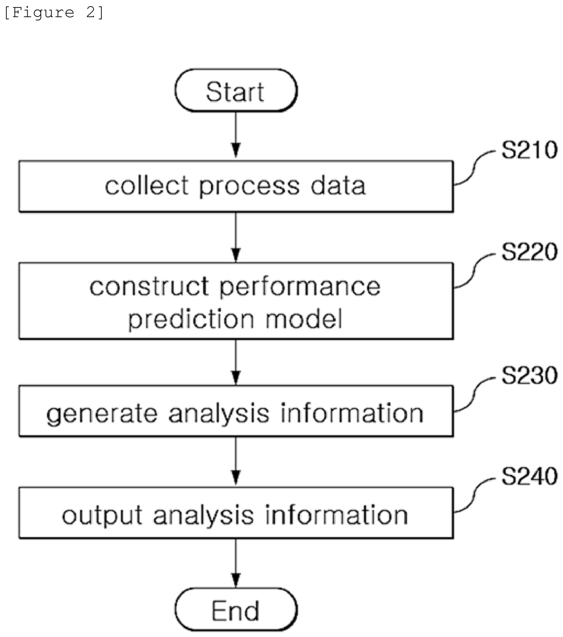

FIG. 2 is an operational flowchart of a data processing method according to embodiments of the present invention.

The data processing apparatus may collect process data (S210). Here, the process data may include process data per each process factor for each of a plurality of batteries.

The process data may include data related to each of a plurality of unit processes. Here, the unit processes may include one or more of an electrode coating process, an electrode rolling process, an assembly process, an activation process, and an EOL process.

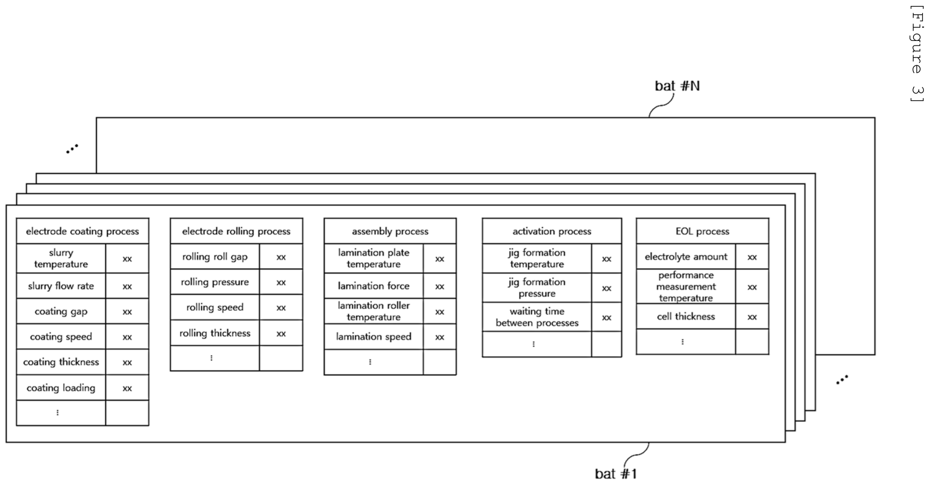

FIG. 3 is an example of process data according to embodiments of the present invention.

Referring to FIG. 3, the data processing apparatus may collect process data classified into a plurality of data instances. Here, a data instance may mean process data for each process factor for an individual battery. For example, the data processing apparatus may collect process data for each process factor for each of 100,000 battery cells.

The process factors included in the electrode coating process (first unit process) may include one or more of a slurry temperature, a slurry flow rate, a coating gap, a coating speed, and a coating thickness.

The process factors included in the electrode rolling process (second unit process) may include one or more of a rolling roll gap, a rolling pressure, a rolling speed, and a rolling thickness.

The process factors included in the assembly process (third unit process) may include one or more of a lamination plate temperature, a lamination force, a lamination roller temperature, and a lamination speed.

The process factors included in the activation process (fourth unit process) may include one or more of a jig formation temperature, a jig formation pressure, and a waiting time between processes.

The process factors included in the EOL process (fifth unit process) may include one or more of an electrolyte amount, a performance measurement temperature, and a cell thickness.

The data processing apparatus may use the collected process data to produce process data for a specific process factor. For example, the data processing apparatus may use the collected process data to produce process data for a rolling rate, a thickness of the cathode after activation, a porosity rate of the cathode after activation, etc.

Meanwhile, the process factors for each unit process illustrated in Fig. 3 are examples for a clear explanation of the present invention, and thus, the scope of the present invention is not limited to the types of process factors.

Referring back to FIG. 2, the data processing apparatus may construct a performance prediction model using process data (S220). Here, the performance prediction model may correspond to an artificial intelligence model based on machine learning that outputs one or more prediction values for one or more battery performance factors when specific process data is input.

Specifically, the data processing apparatus may construct a performance prediction model that outputs one or more prediction values for one or more performance factors using process data for each process factor. Here, the data processing apparatus may train the performance prediction model using process data for each process factor as learning data. The performance prediction model may be defined to output at least one prediction value for a battery performance factor as output data when specific process data is input as input data. Here, the performance prediction value output through the performance prediction model may correspond to at least one prediction value for performance factor including one or more of the capacity and the resistance of the battery.

The data processing apparatus may generate analysis information indicating influence of one or more of the process factors on the performance prediction value of the performance prediction model using the performance prediction model built in S220 (S230). Here, the analysis information may include an influence index for one or more process factors. The influence index may mean a numerical value indicating a degree of influence that an individual process factor has on the performance prediction value of the performance prediction model.

In mbodiments, the data processing apparatus may calculate an influence index for an individual process factor based on a change in the performance prediction value according to a change in the individual process factor.

For example, the data processing apparatus may calculate an influence index for a corresponding process factor based on a difference between a performance prediction value of the performance prediction model and an average value of performance prediction values calculated by randomly changing a feature value of a specific process factor.

In another example, the data processing apparatus may calculate an influence index for the corresponding process factor based on a difference between a performance prediction value of the performance prediction model and a performance prediction value calculated by removing a feature value of a specific process factor.

In another embodiment, the data processing apparatus may calculate an influence index for the corresponding process factor based on a contribution of a specific process factor calculated by propagating the performance prediction value backward to the performance prediction model.

The influence index may be calculated as a positive or negative number. Here, if the influence index is positive, it means that it has a positive influence on the performance prediction value (i.e., it contributes to increasing the performance prediction value), and if it is negative, it means that it has a negative influence on the performance prediction value (i.e., it contributes to decreasing the performance prediction value).

The data processing apparatus may output analysis information generated in S230 through a predefined Graphical User Interface (GUI) (S240).

The data processing apparatus may select top N process factors with high influence indexes (N is a natural number greater than or equal to 2, which is predefined or input by a user) and output the selected process factors and the influence indexes of each process factor through the GUI.

The data processing apparatus may generate visual content corresponding to the output items input by a user and output the visual content through the GUI. Here, the visual content may include a combination of objects that the user may visually recognize (e.g., lines, arrows, shapes, N-dimensional graphs, etc.). For example, when a specific output item (e.g., instance-specific influence, process factor-specific influence, unit process-specific influence) is input by a user, the data processing apparatus may collect and process analysis information related to the output item to generate visual content and output the visual content through the GUI.

The data processing apparatus may visualize and output one or more of a length, a size, a direction, and a color of an object corresponding to a process factor so as to correspond to the influence index of the corresponding process factor. For example, when an output request for process factor-specific influence is received, the data processing apparatus may visualize and output the influence index for each of a plurality of process factors in the form of a horizontal bar graph. Here, the data processing apparatus may group the process factors by unit process and output each group in a different color.

The user may identify a process factor that affects the performance of the battery or intuitively understand a degree to which the process factor affects the performance of the battery through the analysis information output through the GUI according to embodiments of the present invention.

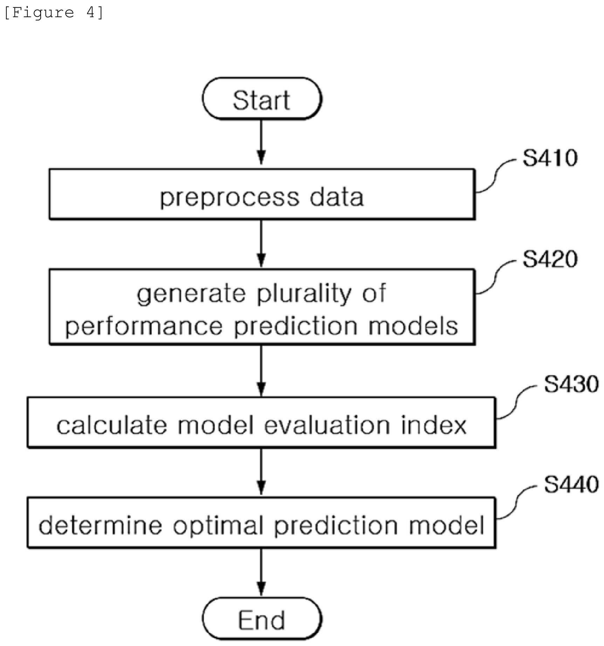

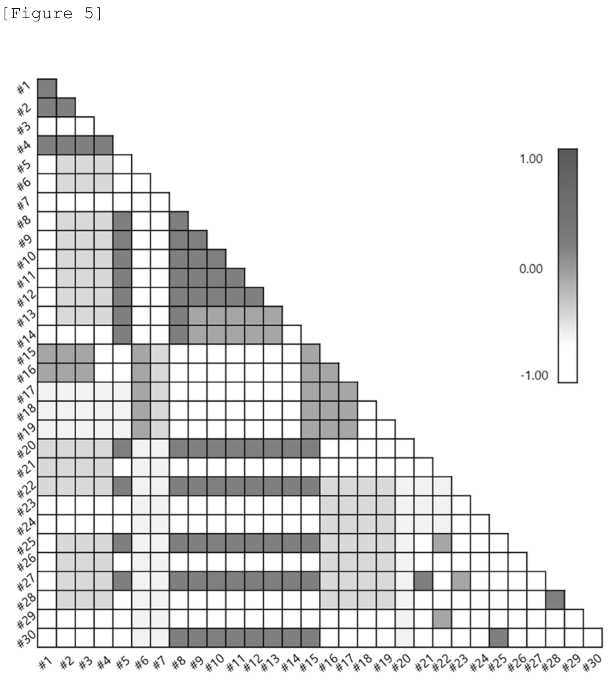

FIG. 4 is an operational flowchart of a method for constructing performance prediction model according to embodiments of the present invention. In addition, FIG. 5 is a reference diagram for explaining a data preprocessing method according to embodiments of the present invention.

The data processing apparatus may perform a preprocessing process which is predefined for the process data collected in S210 (S410).

The preprocessing process may include a data engineering process for processing data instances and a feature engineering process for processing process factors included in each of the data instances.

First, in the data engineering process, one or more data instances may be removed according to a predefined criterion.

For example, the data processing apparatus may remove data instances for batteries manufactured in a predefined coating LOT and batteries having feature values that deviate from predefined domain knowledge among 100,000 data instances.

Next, in the feature engineering process, process data for one or more process factors may be removed based on a predefined criterion. Specifically, the data processing apparatus may remove process data for one or more process factors among the plurality of process factors based on one of the correlation degrees and importance degrees for the plurality of process factors.

For example, as shown in FIG. 5, the data processing apparatus may calculate correlation coefficients between the process factors (#1 to #30) and remove process data for process factors having correlation coefficients exceeding a predefined threshold value. Here, the correlation coefficient may include a Pearson Correlation Coefficient. In addition, the data processing apparatus may calculate importance indices for each of the process factors and remove process data for process factors having importance indices less than a predefined threshold value. Here, the importance indices may include a permutation importance score.

Referring back to FIG. 4, the data processing apparatus may construct machine learning-based performance prediction models using process data for which the preprocessing process has been completed (S420). Here, the data processing apparatus may generate a plurality of performance prediction models by applying different learning algorithms.

For example, the data processing apparatus may generate a Random Forest-based performance prediction model, an XGBoost-based performance prediction model, and a Deep Neural Network-based performance prediction model, and train each of the performance prediction models using process data for each process factor as learning data.

Thereafter, the data processing apparatus may calculate a model evaluation index for each of the performance prediction models (S430) and determine a performance prediction model that exhibits optimal performance among the performance prediction models based on the model evaluation index (S440). Here, the model evaluation index may be calculated based on a difference value between a performance prediction value and a performance measurement value.

In embodiments, the data processing apparatus may calculate a Root Mean Square Error (RMSE) and a R Squared Score (R^2) based on the difference value between a performance prediction value and a performance measurement value for each of the Random Forest-based performance prediction model, the XGBoost-based performance prediction model, and the Deep Neural Network-based performance prediction model. Here, the data processing apparatus may determine a performance prediction model having the lowest RMSE or the R^2 closest to 1 as the optimal performance prediction model.

For example, if an RMSE of a Random Forest based charge resistance prediction model is 0.441 and an R^2 is 0.625, an RMSE of a XGBoost-based charge resistance prediction model is 0.311 and a R^2 is 0.814, and an RMSE of the Deep Neural Network-based charge resistance prediction model is 0.395 and an R^2 is 0.669, the data processing apparatus may determine the XGBoost-based charge resistance prediction model with the lowest RMSE and the closest R^2 to 1 as the optimal charge resistance prediction model.

In embodiments, the data processing apparatus may perform an optimization process for the optimal performance prediction model determined in S440. Here, the data processing apparatus may derive an optimal combination of a plurality of hyper parameters included in the performance prediction model by using a Bayesian Optimization algorithm.

Thereafter, the data processing apparatus may generate analysis information for identifying process factors affecting battery performance using the optimized performance prediction model (S230) and output the analysis information through a GUI (S240).

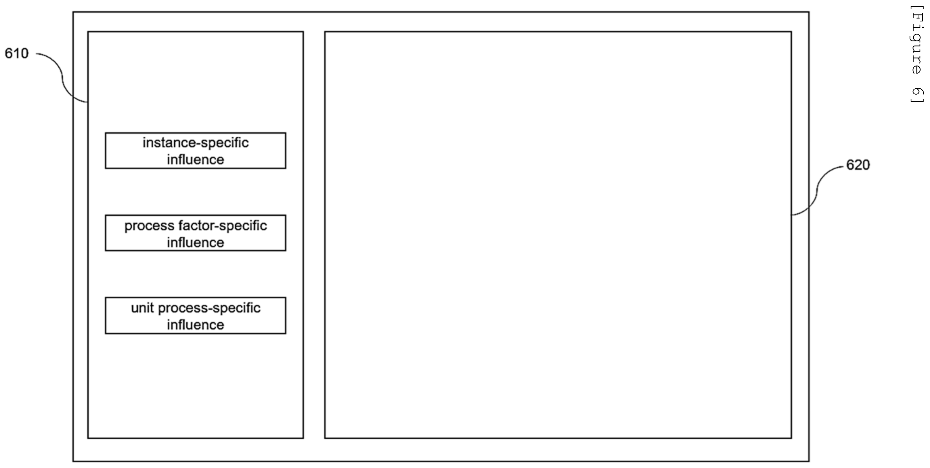

FIG. 6 is an example screen of a user terminal for explaining a GUI according to embodiments of the present invention.

Referring to FIG. 6, analysis information corresponding to an output item input by a user may be visualized and output through a GUI. Here, the GUI may include an output item selection window 610 and an analysis information output window 620.

The data processing apparatus may receive a selection signal for an output item input by a user through the output item selection window 610. Here, the output item may include one or more of an instance-specific influence, a process factor-specific influence, and a unit process-specific influence.

When a specific output item is input by the user, the data processing apparatus may collect and process analysis information related to the output item to generate visual content and output the visual content through the analysis information output window 620.

If the instance-specific influence is selected as an output item and a specific data instance (e.g., a battery identifier) is input, the data processing apparatus may visualize and output an influence index per process factor for the corresponding data instance (the corresponding battery).

If the process factor-specific influence is selected as an output item, the data processing apparatus may visualize and output an influence index for each of a plurality of process factors.

If the process factor-specific influence is selected as an output item and a specific process factor (e.g., coating speed) is input, the data processing apparatus may visualize and output a change in the performance prediction value according to a change in the corresponding process factor.

If the unit process-specific influence is selected as an output item, the data processing apparatus may group the process factors by unit process, and visualize and output an influence index for each of the unit processes.

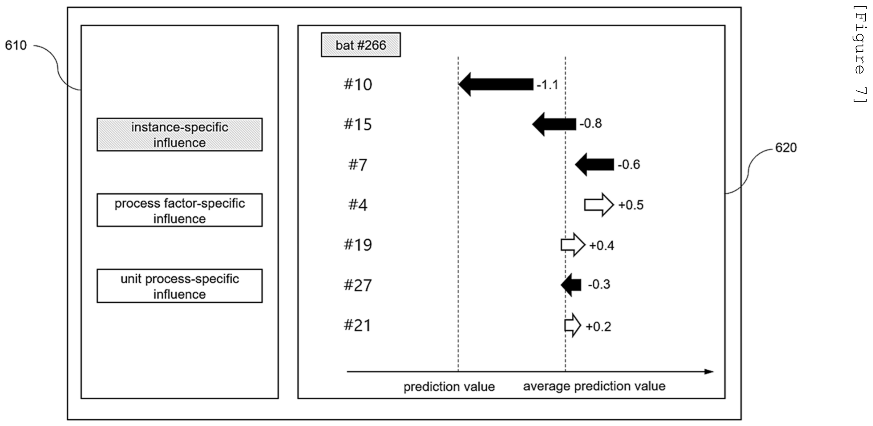

FIGS. 7 to 10 are examples of user terminal screens for explaining analysis information according to embodiments of the present invention.

Referring to FIG. 7, when the instance-specific influence is selected as an output item by a user and a specific data instance (e.g., bat #266) is input, the data processing apparatus may visualize and output an influence index by process factor for a corresponding data instance (bat #266).

Here, the data processing apparatus may select the top N process factors (N is a natural number greater than or equal to 2, which is preset or input by a user) with high influence indexes and output objects corresponding to each of the selected process factors by visualizing them so that they correspond to each influence index.

For example, as illustrated in FIG. 7, the data processing apparatus may select the top 7 process factors (#10, #15, #7, #4, #19, #27, #21) with high influence indexes, and output objects (arrows) corresponding to each process factor by sorting them in descending order. Here, each of the objects (arrows) may have a length corresponding to the size of the influence index and may indicate a direction corresponding to the sign of the influence index.

In addition, the data processing apparatus may define an average prediction value of a performance prediction model as a starting point based on the x-axis, and calculate the starting point and end point of each object based on the influence indexes of the process factors, and visualize them as in Fig. 7. Accordingly, the user may intuitively recognize main process factors affecting the performance of a selected specific battery, and the influence (size and direction) of each of the process factors on the battery performance.

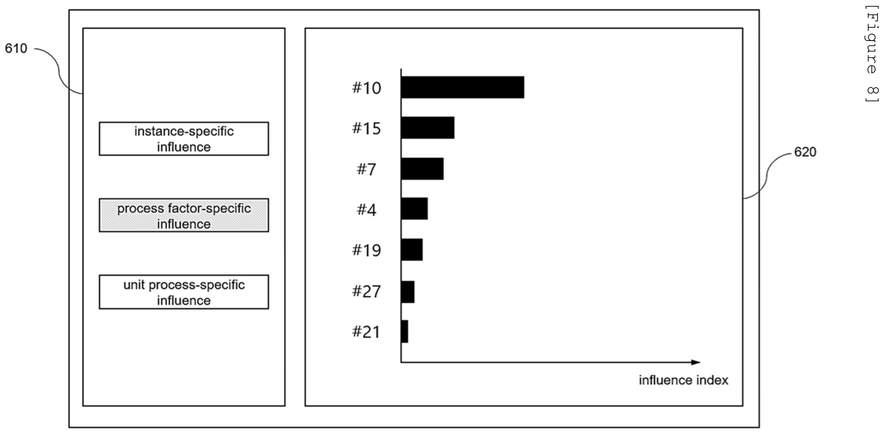

Referring to FIG. 8, when the process factor-specific influence is selected as an output item by a user, the data processing apparatus may output an influence index for each of the plurality of process factors by visualizing it.

Here, the data processing apparatus may select the top N process factors with high influence indexes and output the objects corresponding to each of the selected process factors by visualizing the objects so that the objects correspond to each influence indexes.

For example, as shown in FIG. 8, the data processing apparatus may select the top 7 process factors (#10, #15, #7, #4, #19, #27, #21) with high influence indexes and output the objects (bars) corresponding to each process factor by arranging them in descending order. Here, each of the objects (bars) may be expressed as a length corresponding to absolute values of the influence indexes. Accordingly, the user may intuitively recognize the main process factors affecting the battery performance and the level of influence each of the process factors has on the battery performance.

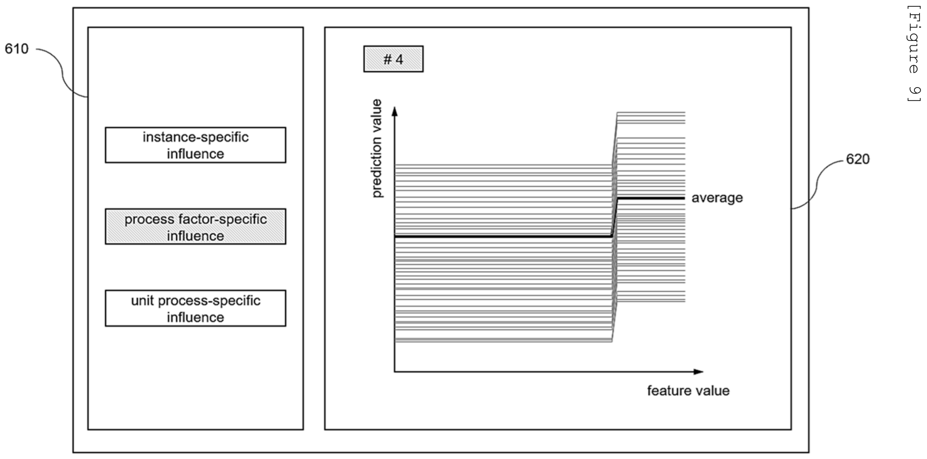

Referring to FIG. 9, when the process factor-specific influence is selected as an output item by a user and a specific process factor (for example, #4) is input, the data processing apparatus may visualize and output a change in the performance prediction value according to a change in the corresponding process factor.

For example, as illustrated in FIG. 9, the data processing apparatus may visualize and output a change in the performance prediction value according to a change in feature value of the selected process factor (#4) in the form of a two-dimensional graph. Here, the data processing apparatus may output the relationship graph of the feature value-performance prediction value for each data instance and the relationship graph for the average value of the data instances together. Accordingly, the user may intuitively recognize a change trend of the battery performance according to a change in the specific process factor and the location of the feature value where the battery performance changes rapidly.

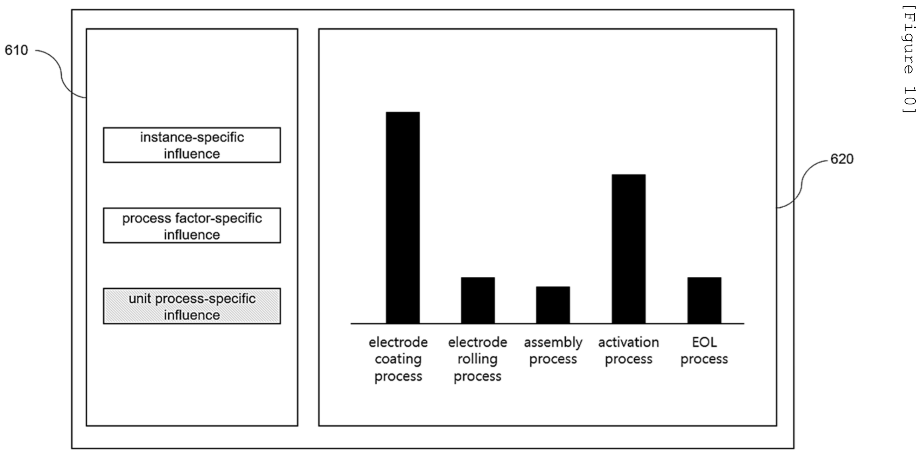

Referring to FIG. 10, when the unit process-specific influence is selected as an output item by a user, the data processing apparatus may output the influence index for each unit process by visualizing it.

Here, the data processing apparatus may group multiple process factors based on the unit process, add up the influence indexes of the process factors included in each unit process, and output the objects corresponding to each unit process by visualizing them so that they correspond to the influence index of each unit process.

For example, as shown in FIG. 10, the data processing apparatus may group the process factors into an electrode coating process, an electrode rolling process, an assembly process, an activation process, and an EOL process, add up the influence indexes of the process factors included in each unit process, and then output the objects (bars) corresponding to each unit process by visualizing them so that they correspond to the influence index of each unit process. Here, each of the objects (bars) may be expressed as a length corresponding to the absolute value of the influence index of each unit process. Accordingly, the user may intuitively recognize the influence of each unit process on battery performance.

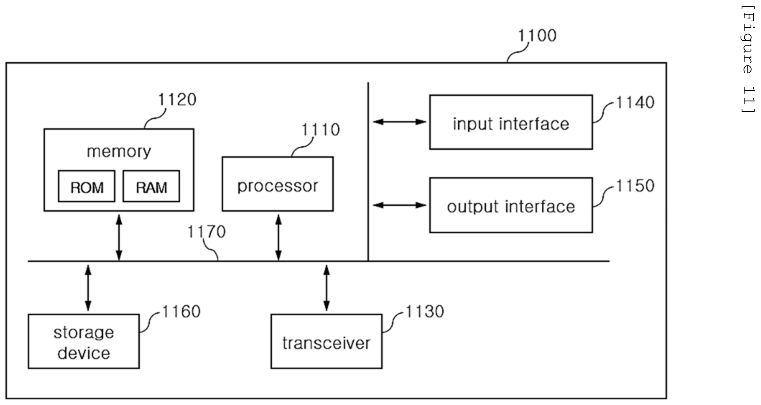

FIG. 11 is a block diagram of a data processing apparatus according to embodiments of the present invention.

The data processing apparatus 1100 for analyzing a battery manufacturing process according to embodiments of the present invention may include at least one processor 1110, a memory 1120 that stores at least one instruction executed by the processor, and a transceiver 1130 connected to a network to perform communication.

The at least one instruction may include an instruction to collect process data for each process factor for a plurality of batteries; an instruction to construct a machine learning-based performance prediction model for predicting battery performance using the process data for each process factor; an instruction to generate analysis information indicating an effect of one or more process factors on a performance prediction value of the performance prediction model; and an instruction to output the generated analysis information through a predefined graphical user interface (GUI).

Here, the process data may include data related to one or more unit process among an electrode coating process, an electrode rolling process, an assembly process, an activation process, and an End Of Line (EOL) process.

The instruction to construct the machine learning-based performance prediction model may include an instruction to remove process data about one or more process factors among the plurality of process factors based on one of the correlation degrees and importance degrees for the plurality of process factors.

The instruction to construct the machine learning-based performance prediction model may include an instruction to construct a performance prediction model that outputs at least one prediction value for one or more performance factors among the capacity and the resistance of the battery by using the process data for each process factor as learning data.

The instruction to construct the machine learning-based performance prediction model may include an instruction to generate a plurality of performance prediction models by applying different learning algorithms; and an instruction to select a performance prediction model that exhibits optimal performance among the performance prediction models, based on difference between a performance prediction value and a performance measurement value for each of the performance prediction models.

The instruction to generate the analysis information may include an instruction to calculate an influence index for each of the process factors based on a change in a performance prediction value according to a change in an individual process factor.

The instruction to output the analysis information through the predefined GUI may include an instruction to visualize and output one or more of a length, a size, a direction, and a color of an object corresponding to a process factor so as to correspond to an influence index of the corresponding process factor.

The instruction to output the analysis information through the predefined GUI may include an instruction to select top N process factors with high influence indexes (N is a natural number greater than or equal to 2); and an instruction to visualize and output objects corresponding to each of the N process factors so as to correspond to respective influence indexes of the objects.

The instruction to output the analysis information through the predefined GUI may include an instruction to group the plurality of process factors based on the unit process; an instruction to sum influence indexes of the process factors included in each of unit processes; and an instruction to visualize and output objects corresponding to each of the unit processes so that the objects correspond to influence indexes per each unit process.

The instruction to output the analysis information through the predefined GUI may include an instruction to output the change in the performance prediction value according to the change in the process factor in the form of a two-dimensional graph.

The data processing apparatus 1100 may further include an input interface 1140, an output interface 1150, a storage device 1160, and the like. Respective components included in the data processing apparatus 1100 may be connected by a bus 1170 to communicate with each other.

Here, the processor 1110 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A data processing apparatus for analyzing a battery manufacturing process comprising:
at least one processor; and
a memory configured to store at least one instruction executed by the at least one processor,
wherein the at least one instruction includes:
an instruction to collect process data for each process factor for a plurality of batteries;
an instruction to construct a machine learning-based performance prediction model for predicting battery performance using the process data for each process factor;
an instruction to generate analysis information indicating an effect of one or more process factors on a performance prediction value of the performance prediction model; and
an instruction to output the generated analysis information through a predefined graphical user interface GUI.

2. The apparatus of claim 1, wherein the process data includes data related to one or more unit process among an electrode coating process, an electrode rolling process, an assembly process, an activation process, and an End Of Line EOL process.

3. The apparatus of claim 2, wherein the instruction to construct the machine learning-based performance prediction model includes:
an instruction to remove process data about one or more process factors among the plurality of process factors based on one of the correlation degrees and importance degrees for the plurality of process factors.

4. The apparatus of claim 2, wherein the instruction to construct the machine learning-based performance prediction model includes:
an instruction to construct a performance prediction model that outputs at least one prediction value for one or more performance factors among the capacity and the resistance of the battery by using the process data for each process factor as learning data.

5. The apparatus of claim 4, wherein the instruction to construct the machine learning-based performance prediction model includes:
an instruction to generate a plurality of performance prediction models by applying different learning algorithms; and
an instruction to select a performance prediction model that exhibits optimal performance among the performance prediction models, based on difference between a performance prediction value and a performance measurement value for each of the performance prediction models.

6. The apparatus of claim 1, wherein the instruction to generate the analysis information includes:
an instruction to calculate an influence index for each of the process factors based on a change in a performance prediction value according to a change in an individual process factor.

7. The apparatus of claim 6, wherein the instruction to output the analysis information through the predefined GUI includes:
an instruction to visualize and output one or more of a length, a size, a direction, and a color of an object corresponding to a process factor so as to correspond to an influence index of the corresponding process factor.

8. The apparatus of claim 6, wherein the instruction to output the analysis information through the predefined GUI includes:
an instruction to select top N process factors with high influence indexes, N is a natural number greater than or equal to 2; and
an instruction to visualize and output objects corresponding to each of the N process factors so as to correspond to respective influence indexes of the objects.

9. The apparatus of claim 6, wherein the instruction to output the analysis information through the predefined GUI includes:
an instruction to group the plurality of process factors based on the unit process;
an instruction to sum influence indexes of the process factors included in each of unit processes; and
an instruction to visualize and output objects corresponding to each of the unit processes so that the objects correspond to influence indexes per each unit process.

10. The apparatus of claim 6, wherein the instruction to output the analysis information through the predefined GUI includes:
an instruction to output the change in the performance prediction value according to the change in the process factor in the form of a two-dimensional graph.

11. A battery processing method for analyzing a battery manufacturing process comprising:
collecting process data for each process factor for a plurality of batteries;
constructing a machine learning-based performance prediction model for predicting battery performance using the process data for each process factor;
generating analysis information indicating an effect of one or more process factors on a performance prediction value of the performance prediction model; and
outputting the generated analysis information through a predefined graphical user interface GUI.

12. The method of claim 11, wherein the process data includes data related to one or more unit process among an electrode coating process, an electrode rolling process, an assembly process, an activation process, and an End Of Line EOL process.

13. The method of claim 12, wherein the constructing the machine learning-based performance prediction model includes:
removing process data about one or more process factors among the plurality of process factors based on one of the correlation degrees and importance degrees for the plurality of process factors.

14. The method of claim 12, wherein the constructing the machine learning-based performance prediction model includes:
constructing a performance prediction model that outputs at least one prediction value for one or more performance factors among the capacity and the resistance of the battery by using the process data for each process factor as learning data.

15. The method of claim 14, wherein the constructing the machine learning-based performance prediction model includes:
generating a plurality of performance prediction models by applying different learning algorithms; and
selecting a performance prediction model that exhibits optimal performance among the performance prediction models, based on difference between a performance prediction value and a performance measurement value for each of the performance prediction models.

16. The method of claim 11, wherein the generating the analysis information includes:
calculating an influence index for each of the process factors based on a change in a performance prediction value according to a change in an individual process factor.

17. The method of claim 16, wherein outputting the analysis information through the predefined GUI includes:
visualizing and outputting one or more of a length, a size, a direction, and a color of an object corresponding to a process factor so as to correspond to an influence index of the corresponding process factor.

18. The method of claim 16, wherein outputting the analysis information through the predefined GUI includes:
select top N process factors with high influence indexes, N is a natural number greater than or equal to 2; and
visualizing and outputting objects corresponding to each of the N process factors so as to correspond to respective influence indexes of the objects.

19. The method of claim 16, wherein outputting the analysis information through the predefined GUI includes:
grouping the plurality of process factors based on the unit process;
summing influence indexes of the process factors included in each of unit processes; and
visualizing and outputting objects corresponding to each of the unit processes so that the objects correspond to influence indexes per each unit process.

20. The method of claim 16, wherein outputting the analysis information through the predefined GUI includes:
outputting the change in the performance prediction value according to the change in the process factor in the form of a two-dimensional graph.
